# FASCICULE DE BREVET EUROPEEN

(11) **EP 0 607 189 B1**
(45) Date de publication et mention de la délivrance du brevet: **27.11.1996**
(21) Numéro de dépôt: 92919987.5
(22) Date de dépôt: 02.10.1992
(51) Int. Cl.: A23G 1/00

(54) **COMPOSITION LIPOPHILE HYDRATEE ET PROCEDE POUR SON OBTENTION---**
WASSERHALTIGE FETTLÖSLICHE ZUSAMMENSETZUNG UND VERFAHREN IHRER HERSTELLUNG
HYDRATED LIPOPHILIC COMPOSITION AND METHOD FOR OBTAINING SAME

(30) Priorité: 04.10.1991 BE 9100914; 28.04.1992 BE 9200389
(43) Date de publication de la demande: 27.07.1994
(73) Titulaire: RAFFINERIE TIRLEMONTOISE, 1150 Bruxelles (BE)
(72) Inventeur: FRIPPIAT, Anne, B-1933 Sterrebeek (BE); DE SOETE, Johan, B-3360 Bierbeek (BE); SMITS, Georges, B-9308 Gijzegem-Aalst (BE); KEME, Thomas, CH-5001 Aarau (CH)
(74) Mandataire: Van Malderen, Michel
(86) Numéro de dépôt international: BE9200043
(87) Numéro de publication internationale: WO9306737

(56) Documents cités:
- EP-A- 0 407 347
- EP-A- 0 437 360
- WO-A-91/19424
- FR-A- 1 037 308
- GB-A- 1 538 750
- US-A- 4 564 525
- Section Ch, Week 8512, 1985 Derwent Publications Ltd., London, GB; Class D, AN 85-072222 (12)

## Description

### Objet de l'invention

La présente invention est relative à une composition lipophile hydratée comme définit dans les revendications.

L'objet de l'invention concerne également le procédé de préparation de la composition selon l'invention.

### Arrière-plan technologique à la base de l'invention

Le chocolat est normalement constitué de substances grasses à caractère hydrophobe et lipophile telles que le beurre de cacao (mélange de triglycéride de stéaryl-, oléyl-, palmityl-, et linoléyl-), contenant en dispersion des substances non grasses, telles que des extraits de cacao (fibres de cellulose, arômes, théobromine,...), des sucres, des protéines (notamment des protéines issues du lait).

D'autres ingrédients peuvent aussi être présents dans le chocolat comme par exemple des fruits, des amandes, des noix, des arômes spéciaux, des liqueurs, des produits de remplacement du sucre et/ou des graisses, etc...).

La phase principale du chocolat a un caractère lipophile et généralement une température de fusion assez basse. A cause du caractère lipophile de la phase du chocolat, il a été jusqu'à présent une règle générale d'utiliser aussi peu de composants contenant de l'eau que possible dans les produits à base du chocolat.

De même, les composants aromatisants utilisés comme la poudre de crème, des jus de fruit pulvérisés, ne contiennent pas ou aussi peu que possible d'eau.

Par conséquent, il est de pratique générale d'évaporer l'eau pendant le conchage et de réduire le contenu en eau jusqu'à environ 1% en poids ou moins.

De même, il a toujours été de pratique de supprimer l'eau dans le chocolat afin d'améliorer les caractéristiques de production, l'impression du goût, l'arôme et de manière générale, les propriétés organoleptiques du chocolat.

Ainsi, le brevet JP 52/12267 décrit l'enrobage préalable de saccharides qui contiennent de l'eau ou sont hygroscopiques, tels que le glucose ou le fructose, par des esters de sucrose lipophile pour prévenir leur caractère hygroscopique et par conséquent l'augmentation du contenu en eau du chocolat.

Le beurre de cacao commence à s'amollir à 28° et la masse de chocolat perd sa consistance et sa forme. La masse ne se casse plus de façon nette, elle ne peut plus maintenir sa forme et colle à l'emballage et aux doigts. La température de ramollissement (28°C) du chocolat normal, constitue un grand inconvénient pour son utilisation générale dans les régions ayant un climat chaud.

Il est bien connu qu'en mélangeant de façon homogène de l'eau, même en petite quantité au chocolat on peut modifier quelques propriétés physiques, telles que le comportement dans des conditions de température élevées.

Cependant, ceci ne peut être réalisé par une simple addition d'eau dans la phase lipophile, même en mixant vu l'incompatibilité entre les deux phases. L'eau provoque un épaississement local extrêmement rapide de l'ingrédient lipophile, ce qui donne lieu à la formation de grumeaux et à une grave détérioration de la mise en oeuvre et de la texture du chocolat.

### Etat de la technique

Pour remédier à ces désavantages, un nombre de recherches sur du chocolat résistant à des températures élevées ont été entreprises.

Une des solutions proposées consiste en la sélection des graisses à point de fusion plus élevé. Cependant, avec ce procédé le chocolat donne une sensation cireuse dans la bouche.

D'autres solutions consistent à interrompre la continuité de la phase grasse dans le chocolat pour minimiser les effets découlant de la fusion de celle-ci sur la perte des propriétés du chocolat. Cette interruption peut être réalisée soit en englobant la phase grasse dans des composants à point de fusion plus élevé (inversion de phase), soit en formant à l'intérieur de la masse un réseau à point de fusion élevé à l'aide de produits solides, autres que les huiles ou les graisses, et qui enferment la phase grasse dans cette structure.

Le brevet CH-409603 décrit l'incorporation directe d'environ 5% d'eau en poids dans le chocolat pendant la production. La masse fondue s'épaissit si vite qu'il est impossible de verser le liquide dans des moules. La composition doit être moulue en poudre qui est alors frittée, sous pression dans des moules.

Le brevet US 2.760.867 décrit l'emploi d'un émulsifiant connu tel que la lécithine, pour incorporer l'eau dans le chocolat. L'utilisation de la lécithine en grande quantité donne lieu à des problèmes d'arôme.

Le brevet CH-410.607 décrit une composition pour chocolat contenant des substances hydrophiles comme le dextrose, le maltose, le sucre inverti, le fructose, le sorbitol... Les articles en chocolat coulés avec cette composition sont soumis à une atmosphère humide où ils absorbent une quantité d'eau, améliorant ainsi la résistance à la chaleur du chocolat.

Dans les brevets CH-399.691 et CH-469.211, on décrit l'incorporation, pendant la production, de sucre amorphe à la composition de chocolat.

Ces sucres, lors de l'absorption d'eau, participent à la construction d'une structure ramifiée qui prévient l'effondrement de la masse quand la température dépasse la température de fusion des graisses utilisées pour la fabrication du chocolat.

Dans le brevet US 4.081.559, une quantité de sucre est ajoutée au chocolat pour que lorsque l'eau est finalement ajoutée, une solution aqueuse de sucre est produite contenant des graisses consommables en émulsion.

Selon le brevet japonais JP 59/156246, du chocolat contenant une petite quantité d'eau (1,5 à 5%) est produit en mélangeant au chocolat des ingrédients hydratés tels que le sirop de glucose, le sucrose, le sucre inverti, l'amidon, le miel, le sorbitol ...

Les graisses peuvent être aussi incorporées sous forme de microcapsules de moins de 2 microns formées d'une membrane comestible et insoluble dans les lipides (brevet CH-519.658).

Selon le brevet FR 2.318.589, une composition de chocolat résistant à toute température jusqu'à 65° peut être préparée en effectuant les opérations suivantes: dans la composition contenant 15 à 35% en poids d'une graisse comestible, et au moins 40% en poids de sucre, on émulsifie avec une quantité d'eau suffisante pour atteindre 100% en poids.

Puis l'eau est évaporée jusqu'à séparation des phases aqueuse et grasse, pour obtenir une composition comestible dans laquelle le contenu en humidité n'est pas supérieur à 5% en poids et dans laquelle chaque globule individuelle de graisse est englobée dans du sucre amorphe (verre de sucre).

Dans le brevet US 4.446.166, l'eau est d'abord émulsifiée dans une phase grasse solide, suivi du moulage de cette émulsion en une poudre de particules très fines et de la dispersion de ces particules dans une masse de chocolat fondu. Comme la phase solide enrobant l'eau possède une inertie thermique suffisante, il est possible par cette technique de distribuer de façon homogène l'eau, englobée dans la graisse, dans la masse du chocolat liquide avant la fusion de la graisse encapsulante et donc avant que l'eau retenue soit libérée des particules.

Cette méthode a comme inconvénient que la masse de chocolat traitée de cette façon doit être préparée avec moins de graisse que normalement car le reste de la graisse est ajouté sous forme d'une émulsion d'eau solide pulvérisée, ce qui pourrait provoquer des problèmes de production indésirables.

Le brevet EP-297.054 décrit un procédé par lequel une mousse de fines bulles d'air ou de gaz dans de l'eau est mélangée avec une masse liquide ayant un caractère lipophile, telle qu'une masse de chocolat, qu'on laisse après se refroidir.

Préférentiellement, la masse est stabilisée par l'addition d'un stabilisateur de mousse amphipatique.

L'air ou le gaz enfermé est alors éliminé du mélange pour la coulée, en soumettant le mélange à une pression réduite ou en le pressant mécaniquement.

Le brevet EP-427.544 décrit la production d'une émulsion stable d'eau dans de l'huile en mixant le chocolat avec une quantité appropriée d'eau en présence d'une pâte à noix ou d'un ester gras de sucre ayant une balance hydrophile-lipophile basse. En plus, un ou plusieurs agents émulsifiants conventionnels peuvent être utilisés tels la lécithine, des esters d'acide gras, de glycol, ou de glycérine.

Selon le brevet EP-393327 un chocolat résistant à la chaleur est produit par mixage des produits de base pour le chocolat avec une émulsion d'eau dans de l'huile, formée par émulsification en présence d'un agent émulsifiant d'une phase d'huile et d'une phase d'eau dans laquelle un produit hydrophile tel que par exemple le sucre, le sucre de fruit, le sucre de malt,... est contenu. Une ossature se forme graduellement avec les solides, autres que les huiles ou les graisses. Après le stockage pendant 20 jours à 18°C, le chocolat conserverait sa forme dans des atmosphères de 40 et 50°C.

Le brevet JP 60/027339 décrit la préparation d'un chocolat à haute contenance d'eau en ajoutant au chocolat une émulsion d'eau dans de l'huile formée par une composante d' huile, une composante contenant beaucoup d'eau et un agent émulsifiant ayant un caractère lipophile spécifique.

Selon le brevet JP 03/053847, un chocolat ayant un contenu élevé d'eau est préparé en ajoutant des constituants contenant beaucoup d'eau à une base chocolat, qui contient des polyesters lipophiles de sucrose et d'acides gras insaturés.

Le brevet JP 57/115140 décrit une composition de chocolat, résistant à la chaleur, qui contient des particules qui forment une émulsion d'eau dans l'huile dans laquelle au moins une partie comprend des acides gras solidifiés.

GB-A-1 538 750 décrit un produit comprenant du cacao, du beurre de cacao, du sucre, une gomme ou de la gélatine dans lequel le beurre de cacao est présent en particule individuelles qui sont séparées les unes des autres.

De cette description de l'état de la technique, il est clair que beaucoup de techniques ont été proposées pour l'incorporation d'eau dans le chocolat dans le but d'améliorer ses propriétés sous les climats chauds. Mais comme l'addition d'eau mène à un épaississement extrêmement rapide de la masse lipophile, il s'avère pratiquement impossible de distribuer très finement et de manière homogène cette eau dans le chocolat.

Ceci a pour conséquence que ce type de chocolat hydraté possède une texture de grain et une sensation rugueuse dans la bouche.

De plus, sa structure donne une sensation croquante et fragile en bouche. En outre, dans beaucoup de cas une étape supplémentaire est requise lors de la production ce qui influence négativement la productivité.

### But de l'invention

La présente invention vise à fournir une composition lipophile hydratée telle que le chocolat tout en minimisant les inconvénients de l'état de la technique susmentionnés.

Un but complémentaire de la présente invention consiste à fournir un chocolat résistant à la chaleur, qui donne une palpation douce de fusion dans la bouche, une sensation douce dans la bouche et qui a une qualité équivalente au bon chocolat tout en maintenant sa forme à une température au-dessus de 40°C, voire même à une température de 55 à 75°C et qui ne colle pas aux mains.

### Eléments caractéristiques de l'invention

L'invention concerne une composition lipophile hydratée comprenant un ingrédient lipophile avec un ingrédient aqueux, dans lequel l'eau est immobilisée.

L'ingrédient aqueux comprend de l'eau ou une composition aqueuse.

De préférence, la composition aqueuse est choisie parmi le groupe constitué par de la crème fraîche, du jus, de la liqueur, du miel naturel, du lait, des sucres liquides, des aromatisants, du vin, du café ou un mélange de ceux-ci.

Pour des fins non alimentaires, d'autres compositions aqueuses dans lesquelles l'eau est la phase principale peuvent être utilisées.

Avantageusement, l'eau de l'ingrédient aqueux est immobilisée par une structure tridimensionnelle, telle que un gel qui comprend de préférence des hydrates de carbone aux propriétés gélifiantes et/ou des pectines.

Selon une forme d'exécution préférée de l'invention, l'hydrate de carbone est choisi parmi le groupe constitué par des fructanes, de préférence l'inuline éventuellement modifiée par une réaction de ramification, des fécules de pommes de terre, des amidons tels que des amidons de maïs, de froment, de riz ou de manioc, des gommes arabiques ou un mélange de ceux-ci. Avantageusement, les fécules de pommes de terre et/ou les amidons peuvent également être modifiés.

Selon l'invention, la composition comprend entre 0,1 et 15% en poids d'eau ou de composition aqueuse, de préférence entre 0,1 et 10% d'eau ou de composition aqueuse, dans l'ingrédient lipophile.

De préférence, l'ingrédient lipophile est une masse de chocolat ou une masse de remplacement du chocolat.

Un autre aspect de l'invention concerne un procédé de préparation de la composition selon l'invention dans lequel on mélange un ingrédient lipophile avec un ingrédient aqueux, dans lequel l'eau est immobilisée.

L'invention concerne également un procédé pour l'incorporation d'un ingrédient aromatisant contenant beaucoup d'eau dans une masse lipophile telle qu'une masse de chocolat, caractérisée en ce qu'on immobilise préalablement l'eau dans l'ingrédient selon le procédé susmentionné. Par ce procédé, on ne doit plus éliminer au préalable l'eau de ces ingrédients.

Il est bien entendu que toute méthode par laquelle on capte et immobilise l'eau, peut être utilisée.

Avantageusement, on peut également par l'incorporation d'eau obtenir du chocolat à réduction calorique. De même, on peut également combiner cette méthode d'incorporation d'eau avec l'utilisation de produits de remplacement du sucre et/ou de graisses pour obtenir du chocolat à forte réduction calorique.

### Description d'une forme d'exécution préférée de l'invention

Pour résoudre le problème associé à l'incorporation uniforme et homogène de l'eau ou des ingrédients aqueux dans un ingrédient à caractère lipophile, la demanderesse a entrepris des recherches approfondies qui ont abouti à la mise au point d'un procédé facile à mettre en service.

Cet ingrédient aqueux peut être de l'eau ou une composition aqueuse telle que de la crème, du lait, du jus, de la liqueur, des sucres liquides, du miel naturel,... ou d'autres aromatisants contenant beaucoup d'eau tels que du vin, du café ou n'importe quelle combinaison de ceux-ci.

Dans la suite de la description, le terme "eau" se réfère aussi bien à l'eau elle-même qu'à tout ingrédient aqueux.

Lors de l'introduction de l'eau dans un ingrédient lipophile, il est absolument nécessaire que l'eau n'entre pas en contact direct avec l'ingrédient lipophile avant d'être réparti de manière homogène dans cet ingrédient. Il faut donc essayer de retarder le plus possible cette mise en contact entre l'eau et l'ingrédient lipophile.

La demanderesse a trouvé qu'en immobilisant l'eau ou l'ingrédient aqueux, on pouvait la mélanger de manière uniforme et homogène dans un ingrédient lipophile sans aucune détérioration des propriétés de ce dernier.

L'eau est immobilisée en la captant dans une structure tridimensionnelle, telle qu'un gel.

Dans la littérature, il existe beaucoup de définitions d'un gel: on peut par exemple mentionner une définition très brève à la page 204 du "Advances in Food and Nutrition Research", "Vol.34, Eds J.E. Kinsel, Academic Press, 1990": "Gel may be defined by the ability to immobilize a liquid". A la page 205 de ce même ouvrage, une classification des gels en quatre types est donnée sur base de critères structuraux.

Dans l'introduction au chapitre "On the fractal nature of Particle gels", à la page 369 du livre "Food Polymers, Gels and colloids", Ed. E. Dickinson, Special Publication n° 82 du Royal society of Chemistry", on lit une autre définition qu'on retrouve aussi dans le livre précédent aux pages 204 et 205: "un gel est un réseau tridimensionnel continu de molécules ou particules connectées dans une phase liquide continue".

Au second paragraphe de la page 369, les auteurs décrivent que: "la plupart des chercheurs pensent principalement qu'un réseau de gel est constitué de macromolécules longues et flexibles qui sont ramifiées à certains endroits, soit par des liaisons covalentes, soit par des domaines micro-cristallins, soit par enchevêtrement, soit par d'autres liaisons. Il existe cependant d'autres types de gel: des molécules amphiphiles assez petites peuvent s'associer pour former une structure tridimensionnelle autour d'une solution liquide. Les particules suspendues peuvent également s'agréger et former un réseau continu plutôt irrégulier".

Une caractéristique de tous les gels, est qu'ils ont l'apparence d'un solide et que malgré cela il y a une activité de l'eau élevée, indiquant que l'eau est non-liée ou libre.

Cette eau ne s'écoule pas du gel même quand on coupe le gel.

En général, on pourrait dire que toute structure qui immobilise l'eau convient à l'incorporation homogène de l'eau dans des ingrédients à caractère lipophile.

Tous les produits capables d'immobiliser l'eau, soit en formant un gel, soit par tout autre moyen, conviennent.

Toutefois, comme le chocolat est un produit à consommation humaine, seulement des produits comestibles comme les hydrates de carbone aux propriétés gélifiantes 011 des pectines ont été testées. Comme hydrate de carbone, la demanderesse a utilisé les fructanes telles l'inuline, la fécule de pomme de terre, tel que le Lycadex 100® de la firme Rocquette et Frères ou le Paselli SA2® de la firme Avebe, l'amidon de maïs tel que le Stellar® de la firme Staley. Comme exemple de pectine, le Splendid® de la firme Hercules Inc a été utilisé.

La préparation des gels se fait suivant les indications des producteurs de ces produits, sauf pour le gel d'inuline qui a été préparé d'après la description de la demande de brevet belge 09100914, du 4 octobre 1991 au nom de la demanderesse.

L'addition de ces gels à l'ingrédient à caractère lipophile se fait par simple mélange sous agitation modérée. La masse de chocolat est un exemple type d'un ingrédient à caractère lipophile.

Il est évident que comme masse de chocolat, on peut employer tout genre de chocolat, aussi bien du chocolat normal que du chocolat à teneur réduite en sucre ou à teneur réduite en graisses ou même à teneur réduite en sucre et en graisses.

Par chocolat, il faut comprendre aussi bien le chocolat au lait que le chocolat noir ou le chocolat blanc ou tout chocolat à base de ceux-ci.

Le mélange de l'eau immobilisée avec la masse de chocolat peut se faire avant ou après la températion. Les exemples suivants sont destinés à titre d'illustration et ne limitent en aucun cas la portée de la présente invention.

Pour la facilité, on a pris du chocolat normal qu'on a fait fondre suivie d'une phase de températion comme dans la production normale du chocolat.

Il est évident qu'en fabriquant soi-même le chocolat, en ajoutant l'eau immobilisée avant ou après la températion on obtient le même chocolat.

### Exemple 1: Chocolat contenant de la crème d'inuline.

La crème d'inuline est mélangée au chocolat normal pour obtenir une répartition uniforme et homogène de l'eau dans la masse de chocolat, sans qu'on obtienne les inconvénients décrits dans l'état de la technique. Le chocolat ainsi obtenu a l'apparence de chocolat normal et présente les mêmes propriétés organoleptiques que le chocolat normal.

### Composition (% en poids)

| | |
|---|---|
| chocolat au lait | 95 |
| crème d'inuline (50% m.s.-matière sèche) | 5 |

### Procédé

Verser 250 ml d'eau à température ambiante dans un bécher et placer un Ultra-Turrax® T25 de la firme Jenke & Kunkel Co dans le bécher. Ajouter 250 g d'inuline par petites quantités, afin d'éviter la formation de grumeaux, tandis que l'Ultra-Turrax® tourne à pleine vitesse. Après l'addition complète de l'inuline, continuer le cisaillement pendant 2 à 3 minutes. La crème commence déjà à se former au cours de l'opération.

Faire fondre le chocolat au lait normal dans un four à 45°C. Tempérer le chocolat pour obtenir une bonne fluidité pour le moulage. A cette fin, laisser refroidir le chocolat à 25°C en remuant et réchauffer le chocolat à 27°C.

Ajouter la crème d'inuline au chocolat tempéré. Mélanger le chocolat pour obtenir une masse homogène. Mouler le chocolat dans des formes. Secouer les formes et laisser refroidir. Démouler et emballer le chocolat, qui contient environ 2,5% d'eau.

Il est bien entendu possible de travailler avec d'autres concentrations d'inuline dans la crème. La concentration d'inuline dans la crème peut varier de 10 à 75% en poids, suivant le type d'inuline utilisée.

Plus particulièrement, nous avons préparé des crèmes ayant des concentrations en poids d'inuline de 30, 35, 40, 45, 50 et 55%. Toutes ces crèmes d'inuline ont donné lieu à des chocolats ayant des propriétés organoleptiques équivalentes au chocolat normal, ou tout au moins très acceptables.

La méthode de préparation de la crème n'a aucune influence sur la qualité du chocolat obtenu.

En plus, on peut faire varier la concentration de la crème dans le chocolat. En prenant p.ex une crème à 50% en poids d'inuline, on peut faire varier la concentration de cette crème de 0,1 à 20% en poids dans le chocolat. Dans le tableau n°1, ci-dessous, on a repris quelques résultats qui ont été obtenus en faisant varier les concentrations d'inuline dans la crème et de crème dans la masse de chocolat:

**Tableau 1**

| Variations des concentrations d'inuline dans la crème et de crème dans la masse de chocolat: | | | |
|---|---|---|---|
| Type de masse de chocolat | Concentration de l'inuline dans la crème (% en poids) | Concentration de la crème dans la masse de chocolat (% en poids) | Teneur en eau du chocolat (% en poids) |
| au lait | 40 | 8 | 4,8 |
| noir | 50 | 7 | 3,5 |
| blanc | 50 | 5 | 2,5 |
| au lait | 55 | 18 | 8,1 |
| noir | 50 | 10 | 5 |
| blanc | 50 | 8 | 4 |
| au lait | 35 | 6 | 3,9 |
| au lait | 30 | 4 | 2,8 |
| noir | 45 | 10 | 5,5 |
| au lait | 50 | 12 | 6 |

Pour le chocolat noir du tableau 1, les températures de températion sont respectivement de 27 et 29°C.

Dans tous ces cas, on obtient une masse de chocolat qui possède une bonne viscosité pour le moulage. Les chocolats obtenus ont tous une bonne apparence et donnent une palpation douce de fusion dans la bouche et une sensation douce dans la bouche. Ils ont des propriété organoleptiques équivalentes à celles du bon chocolat usuel, tout en retenant leur forme à des températures au-dessus de 40°C, voire même à des températures de 55°C et 75°C, et ne collent pas lors du touché.

Quand on répétait plusieurs fois le processus de fusion et de solidification sur le chocolat hydraté, on n'a pas pu détecter de séparation des ingrédients, ni de dispersions de la graisse sur la surface de la tablette de chocolat.

### Exemple 2: Chocolat au lait contenant un gel à base de fécule de pomme de terre. (Paselli SA2® ou Lycadex® 100)

### Composition (% en poids)

| | |
|---|---|
| chocolat au lait | 95,3 |
| gel de fécule de pomme de terre (25% m.s.) | 4,7 |

### Procédé

Chauffer 250ml d'eau à 50°C. Ajouter 83 g de fécule de pomme de terre à l'eau. Chauffer le mélange jusque 100°C. Verser le mélange dans un bécher. Placer un Ultra-Turrax® T25 de Jenke & Kunkel Co dans le bécher et le faire tourner à pleine vitesse pendant deux à trois minutes. Mettre le mélange pendant la nuit au réfrigérateur. Ainsi on obtient un gel contenant environ 25% en poids de matière sèche.

Faire fondre le chocolat au lait normal dans un four à 45°C. Tempérer le chocolat pour obtenir une bonne fluidité pour le moulage. A cette fin, laisser refroidir le chocolat à 25°C en remuant et réchauffer le chocolat à 27°C.

Ajouter le gel à base de fécule de pomme de terre modifiée au chocolat tempéré. Mélanger le chocolat pour obtenir une masse homogène. Mouler le chocolat dans des formes. Secouer les formes et laisser refroidir. Démouler et emballer le chocolat, qui contient environ 3,5% d'eau.

L'augmentation de la viscosité du chocolat fondu étant limitée, le moulage peut se faire très aisément. Le chocolat ainsi obtenu possède des propriétés organoleptiques excellentes.

### Exemple 3: Chocolat au lait contenant de l'amidon de maïs modifié (Stellar®).

### Composition (% en poids)

| | |
|---|---|
| chocolat au lait | 94,6 |
| gel d'amidon de maïs modifié (35% m.s.) | 5,4 |

### Procédé

Verser 250 ml d'eau à température ambiante dans un bécher et placer un Ultra-Turrax® T25 de la firme Jenke & Kunkel Co dans le bécher.

Ajouter 134,6 g d'amidon de maïs. Faire tourner l'Ultra-Turrax® à pleine vitesse pendant 2 à 3 minutes. On obtient ainsi une crème contenant 35% de matière sèche.

Faire fondre le chocolat au lait normal dans un four à 45°C. Tempérer le chocolat pour obtenir une bonne fluidité pour le moulage. A cette fin, laisser refroidir le chocolat à 25°C en remuant et réchauffer le chocolat à 27°C.

Ajouter la crème d'amidon de maïs modifié au chocolat tempéré. Agiter le chocolat pour obtenir une masse homogène. Mouler le chocolat dans des formes. Secouer les formes et laisser refroidir. Démouler et emballer le chocolat, qui contient environ 3,5% d'eau.

Le chocolat hydraté de l'exemple et un chocolat normal ont été soumis à un panel de dégustateurs expérimentés, qui n'ont pas été en mesure de trouver des différences organoleptiques substantielles entre les deux types de chocolat.

### Exemple 4: Chocolat au lait contenant un gel de Splendid®

### Composition (% en poids)

| | |
|---|---|
| chocolat au lait | 96,3 |
| gel de Splendid® | 3,7 |

### Procédé

Mélanger à sec 3,7 g de Slendid® et 0,25 g de Genu Pectin type BB Rapid Set, aussi de la firme Hercules Inc. Prendre une partie des 95,6 ml d'eau pour dissoudre 0,4 g de dihydrate de chlorure de calcium. Dissoudre le Splendid® et le Genu Pectin à l'aide d'un mixer à haute vitesse dans le reste d'eau. Ajouter la solution de chlorure de calcium en agitant rapidement. Continuer à agiter jusqu'à ce que le mélange ressemble à une sauce de pomme.

Faire fondre le chocolat au lait normal dans un four à 45°C. Tempérer le chocolat pour obtenir une bonne fluidité pour le moulage. A cette fin, laisser refroidir le chocolat à 25°C en remuant et réchauffer le chocolat à 27°C.

Ajouter le gel Splendid® au chocolat tempéré. Mélanger le chocolat pour obtenir une masse homogène. Mouler le chocolat dans des formes. Secouer les formes et laisser refroidir. Démouler et emballer le chocolat, qui contient environ 3,5% d'eau.

### Exemple 5: Chocolat au lait contenant de la crème fraîche et de l'inuline.

### Composition (% en poids)

| | |
|---|---|
| chocolat au lait | 92 |
| pâte de crème | 8 |

### Procédé

Verser 250 ml de crème fraîche à température ambiante dans un bécher et placer un Ultra-Turrax® T25 de la firme Jenke & Kunkel Co dans le bécher. Ajouter 167 g d'inuline par petites quantités, afin d'éviter la formation de grumeaux, tandis que l'Ultra-Turrax® tourne à pleine vitesse. Après l'addition complète de l'inuline continuer le cisaillement pendant 2 à 3 minutes. Une pâte contenant 60% de crème fraîche et 40% d'inuline est obtenue.

Faire fondre le chocolat au lait normal dans un four à 45°C. Tempérer le chocolat pour obtenir une bonne fluidité pour le moulage. A cette fin, laisser refroidir le chocolat à 25°C en remuant et réchauffer le chocolat à 27°C.

Ajouter la pâte de crème fraîche au chocolat tempéré. Mélanger le chocolat pour obtenir une masse homogène. Mouler le chocolat dans des formes. Secouer les formes et laisser refroidir. Démouler et emballer le chocolat.

Un chocolat avec un excellent goût de crème est obtenu, permettant un moulage facile. Ce chocolat ne fond pas dans la main.

### Exemple 6: Chocolat au lait contenant de la gomme arabique

### Composition (% en poids)

| | |
|---|---|
| chocolat au lait | 93 |
| gel de gomme arabique | 7 |

### Procédé

Chauffer à 100°C 250 ml d'eau dans un bécher. Ajouter 250 g de gomme arabique. Mélanger pendant 15 à 30 minutes jusqu'à ce que le mélange soit homogène. Laisser reposer pour que le gel se forme.

Faire fondre le chocolat au lait normal dans un four à 45°C. Tempérer le chocolat pour obtenir une bonne fluidité pour le moulage. A cette fin, laisser refroidir le chocolat à 25°C en remuant et réchauffer le chocolat à 27°C.

Ajouter le gel de gomme arabique au chocolat tempéré. Mélanger le chocolat pour obtenir une masse homogène. Mouler le chocolat dans des formes. Secouer les formes et laisser refroidir. Démouler et emballer le chocolat qui contient environ 3,5% d'eau.

Comme la viscosité du chocolat fondu n'augmente presque pas lors de l'addition du gel, cela permet un moulage aise. Le chocolat ainsi obtenu a des propriétés organoleptiques équivalentes au chocolat normal et ne fond pas à la main.

### Exemple 7: Chocolat au lait contenant de la crème d'inuline

### Composition (% en poids)

| | |
|---|---|
| chocolat au lait | 90 |
| crème d'inuline (50% de m.s.) | 10 |

### Procédé

Préparer la crème d'inuline selon l'exemple 1. Faire fondre le chocolat au lait dans un four à 45°C. Ajouter la crème d'inuline au chocolat fondu. Mélanger le chocolat pour obtenir une masse homogène. Tempérer le chocolat pour obtenir une bonne fluidité pour le moulage. A cette fin, laisser refroidir le chocolat à 25°C en remuant et réchauffer le chocolat à 27°C. Mouler le chocolat dans des formes. Secouer les formes et laisser refroidir. Démouler et emballer le chocolat, qui contient environ 5% d'eau.

L'addition de la crème d'inuline à la masse de chocolat peut aussi bien se faire avant la températion qu'après la températion (comme décrit dans l'exemple 1). Comme il est apparu clairement des essais de dégustation, aucune différence dans les propriétés organoleptiques entre du chocolat fait selon l'exemple 1 et selon cet exemple n'a pu être décelée.

### Exemple 8: Chocolat noir contenant du jus de fruit.

### Composition (% en poids)

| | |
|---|---|
| chocolat noir | 93 |
| crème au jus d'orange | 7 |

### Procédé

Verser 250 ml de jus d'orange à température ambiante dans un bécher et placer un Ultra-Turrax® T25 de la firme Jenke & Kunkel Co dans le bécher. Ajouter 250 g d'inuline par petites quantités, afin d'éviter la formation de grumeaux, tandis que l'Ultra-Turrax® tourne à pleine vitesse. Après l'addition complète de l'inuline, continuer le cisaillement pendant 2 à 3 minutes.

Faire fondre le chocolat noir normal dans un four à 45°C. Tempérer le chocolat pour obtenir une bonne fluidité pour le moulage. A cette fin, laisser refroidir le chocolat à 27°C en remuant et réchauffer le chocolat à 29°C.

Ajouter la crème d'inuline au jus d'orange au chocolat tempéré. Mélanger le chocolat pour obtenir une masse homogène. Mouler le chocolat dans des formes. Secouer les formes et laisser refroidir. Démouler et emballer le chocolat, qui contient environ 3,5% d'eau.

Un chocolat aux propriétés organoleptiques excellentes, qui ne fond pas dans la main et qui se laisse mouler très facilement, est obtenu.

Comme le démontre aussi l'exemple 5, l'immobilisation de l'eau dans la crème fraîche ou dans le jus de fruit, offre une méthode efficace pour l'introduction d'arômes dans des masses lipophiles sans devoir éliminer préalablement l'eau.

### Exemple 9: Test de résistance à une chaleur de 40°C

Des chocolats des exemples 1, 2, 3, 4, 6, 7 ont été placés avec un chocolat au lait standard dans un four à 40°C. Après une heure le chocolat standard a perdu sa forme, tandis que les autres chocolats conservent leur forme. Après six heures, le chocolat standard s'est complètement écoulé, tandis que les chocolats des différents exemples possèdent encore toujours leur forme initiale.

### Exemple 10: Test de durée de vie

Les chocolats préparés suivant les exemples 1 à 8 ont été mis dans un cabinet d'acclimatation à une température de 20°C et une humidité relative de 65% pour une période de 15 jours. On n'a pas pu voir de changement à la surface des chocolats.

### Exemple 11: Test de pression au pouce

Les chocolats préparés suivant les exemples 1, 2, 3, 4, 6 et 7 ont été évalués en pressant avec le pouce sur les tablettes de chocolat pendant une minute. Aucun chocolat ne fondait et ne collait au pouce. Le même test avec un chocolat au lait standard donnait une surface fondue et collante.

## Revendications

1. Chocolat hydraté comportant une phase de graisse continue. caractérisé en ce qu'il comprend un ingrédient aqueux dans lequel l'eau est immobilisée dans un gel constitué par des pectines et/ou des hydrates de carbone aux propriétés gélifiantes et choisis parmi le groupe constitué par des fructanes, des fécules de pommes de terre, des amidons, des gommes arabiques ou un mélange de ceux-ci.

2. Chocolat selon la revendication 1, caractérisé en ce que l'ingrédient aqueux comprend de l'eau ou une composition aqueuse.

3. Chocolat selon la revendication 2, caractérisé en ce que la composition aqueuse est choisie parmi le groupe constitué par de la crème fraîche, du jus, de la liqueur, du miel naturel, du lait, des sucres liquides, des aromatisant, du vin, du café ou un mélange de ceux-ci.

4. Chocolat selon l'une quelconque des revendications précédentes, caractérisé en ce qu'il contient entre 0,1 et 15 % en poids d'eau ou de composition aqueuse.

5. Chocolat selon la revendication 4, caractérisé en ce qu'il contient entre 0,1 et 10 % d'eau ou de composition aqueuse.

6. Chocolat hydraté selon l'une quelconque des revendications précédentes, caractérisé en ce que les fructanes sont de l'inuline.

7. Chocolat selon l'une quelconque des revendications précédentes, caractérisé en ce que les amidons sont des amidons de maïs, de froment, de riz ou de manioc.

8. Procédé de préparation d'un chocolat hydraté selon l'une quelconque des revendications précédentes, caractérisé en ce qu'on mélange une masse de chocolat ou une masse de remplacement de chocolat avec un ingrédient aqueux dans lequel l'eau est immobilisée dans un gel constitué par des pectines et/ou des hydrates de carbone aux propriétés gélifiantes et choisis parmi le groupe constitué par des fructanes, des fécules de pommes de terre, des amidons, des gommes arabiques ou un mélange de ceux-ci.

9. Procédé selon la revendication 8, caractérisé en ce que les fructanes sont de l'inuline.

10. Procédé selon la revendication 8 ou 9, caractérisé en ce que les amidons sont des amidons de maïs, de froment, de riz ou de manioc.

11. Procédé pour l'incorporation d'un ingrédient aromatisé contenant beaucoup d'eau dans une masse de chocolat ou de remplacement de chocolat, caractérise en ce qu'on immobilise préalablement l'eau dans l'ingrédient aqueux selon le procédé de l'une quelconque des revendications 8 à 10.

## Claims

1. Hydrated chocolate comprising a continuous fat phase, characterized in that it comprises an aqueous ingredient in which the water is immobilised in gel constituted by pectins and/or carbohydrates with gelling properties and chosen from the group of consisting of fructans, potato flours, starches, gum arabic or a mixture thereof.

2. Chocolate according to claim 1, characterized in that the aqueous ingredient comprises water or an aqueous composition.

3. Chocolate according to claim 2, characterized in that the aqueous composition is chosen from the group consisting of crème fraîche, juice, liqueur, natural honey, milk, liquid sugars, flavourings, wine, coffee or a mixture thereof.

4. Chocolate according to any of the preceding claims, characterized in that it contains 0.1 and 15% by weight of water or of an aqueous composition.

5. Chocolate according to claim 4, characterized in that it contains between 0.1 and 10% water or aqueous composition.

6. Hydrated chocolate according to any of the preceding claims, characterized in that the fructans are inulin.

7. Chocolate according to any of the preceding claims, characterized in that the starches are corn wheat, rice or cassava starches.

8. Process for the preparation of hydrated chocolate according to any of the preceding claims, characterized in that a chocolate mass or a chocolate substitute mass is mixed with an aqueous ingredient in which the water is immobilized in a gel constituted by pectins and/or carbohydrates with gelling properties and chosen from the group consisting of fructans, potato flours, starches, gum arabic or a mixture thereof.

9. Process according to claim 8, characterized in that the fructans are inulin.

10. Process according to claim 8 or 9, characterized in that the starches are corn wheat, rice or cassava starches.

11. Process for the preparation of flavouring ingredients containing a lot of water into a chocolate mass or a chocolate substitute mass, characterized in that the water is previously immobilized in the aqueous ingredient according to the process of any of the preceding claims 8 to 10.

## Patentansprüche

1. Hydratisierte Schokolade, die eine kontinuierliche Fettphase umfaßt, dadurch gekennzeichnet, daß sie einen wässerigen Bestandteil aufweist, bei dem das Wasser in einem Gel gebunden ist, das aus Pektinen und/oder Kohlehydraten mit gelierenden Eigenschaften besteht, wobei die Kohlehydrate aus der Gruppe ausgewählt sind, die von Fruktanen, Kartoffelmehl, Stärke, Gummi arabicum, oder einem Gemisch davon gebildet wird.

2. Schokolade gemäß Anspruch 1, dadurch gekennzeichnet, daß der wässerige Bestandteil Wasser oder eine wässerige zusammensetzung aufweist.

3. Schokolade gemäß Anspruch 2, dadurch gekennzeichnet, daß die wässerige Zusammensetzung aus der Gruppe ausgewählt ist, die von Sahne, Saft, Likör, natürlichem Honig, Milch, flüssigem Zucker, Aromastoffen, Wein, Kaffee, oder einem Gemisch davon gebildet wird.

4. Schokolade gemäß irgendeinem der vorhergehenden Ansprüche, dadurch gekennzeichnet, daß sie zwischen 0,1 und 15 Gewichtsprozent Wasser oder einer wässerigen Zusammensetzung enthält.

5. Schokolade gemäß Anspruch 4, dadurch gekennzeichnet, daß sie zwischen 0,1 und 10 Gewichtsprozent Wasser oder einer wässerigen Zusammensetzung enthält.

6. Hydratisierte Schokolade gemäß irgendeinem der vorhergehenden Ansprüche, dadurch gekennzeichnet, daß die Fruktane Inulin sind.

7. Schokolade gemäß irgendeinem der vorhergehenden Ansprüche, dadurch gekennzeichnet, daß die Stärke Mais-, Weizen-, Reis- oder Maniokstärke ist.

8. Verfahren zur Herstellung einer hydratisierten Schokolade gemäß irgendeinem der vorhergehenden Ansprüche, dadurch gekennzeichnet, daß eine Schokoladenmasse oder eine Schokoladenersatzmasse mit einem wässerigen Bestandteil gemischt wird, bei dem das Wasser in einem Gel gebunden ist, das aus Pektinen und/oder Kohlehydraten mit gelierenden Eigenschaften besteht, wobei die Kohlehydrate aus der Gruppe ausgewählt sind, die von Fruktanen, Kartoffelmehl, Stärke, Gummi arabicum, oder einem Gemisch davon gebildet wird.

9. Verfahren gemäß Anspruch 8, dadurch gekennzeichnet, daß die Fruktane Inulin sind.

10. Verfahren gemäß Anspruch 8 oder 9, dadurch gekennzeichnet, daß die Stärke Mais-, Weizen-, Reis- oder Maniokstärke ist.

11. Verfahren zur Einbringung eines aromatisierten Bestandteils, der viel Wasser enthält, in eine Schokoladenmasse oder eine Schokoladenersatzmasse, dadurch gekennzeichnet, daß das Wasser in dem wässerigen Bestandteil gemäß dem Verfahren von irgendeinem der Ansprüche 8 bis 10 vorher gebunden wird.
